# EUROPEAN PATENT SPECIFICATION

(11) **EP 2 795 841 B1**
(45) Date of publication and mention of the grant of the patent: **24.11.2021**
(21) Application number: 12861017.7
(22) Date of filing: 16.01.2012
(51) Int. Cl.: H04L 12/24

(54) **METHOD AND ARRANGEMENT FOR FAULT ANALYSIS IN A MULTI-LAYER NETWORK**
VERFAHREN UND ANORDNUNG ZUR FEHLERANALYSE IN EINEM MEHRSCHICHTIGEN NETZWERK
PROCÉDÉ ET AGENCEMENT D'ANALYSE DE PANNE DANS UN RÉSEAU MULTICOUCHE

(30) Priority: 21.12.2011 US 201161578419 P
(43) Date of publication of application: 29.10.2014
(73) Proprietor: Telefonaktiebolaget LM Ericsson (publ), 164 83 Stockholm (SE)
(72) Inventor: ZHANG, Ying, Fremont, CA 94555 (US); BEHESHTI-ZAVAREH, Neda, San Jose, CA 95134 (US); DEVLIC, Alisa, S-117 61 Stockholm (SE); MEIROSU, Catalin, S-112 26 Stockholm (SE)
(74) Representative: Zacco Sweden AB
(86) International application number: PCT/SE2012/050028
(87) International publication number: WO 2013/095247

(56) References cited:
- US-A1- 2008 114 874
- US-A1- 2011 231 704
- STEINERT, R. ET AL.: 'A Distributed Spatio- Temporal Event Correlation Protocol for Multi-Layer Virtual Networks' GLOBAL TELECOMMUNICATIONS CONFERENCE 2011, pages 1 - 5, XP032119187
- JEN-WEI HU ET AL.: 'Implementation of Alarm Correlation System for Hybrid Networks Based upon the perfSONAR Framework' ADVANCED INFORMATION NETWORKING AND APPLICATIONS WORKSHOPS 2010, pages 893 - 898, XP031687138
- TE-LUNG LIU ET AL.: 'Design of Alarm Management System in Hybrid IP/Optical Networks' ADVANCED INFORMATION NETWORKING AND APPLICATIONS WORKSHOPS, 2009. WAINA '09. INTERNATIONAL CONFERENCE 26 May 2009, pages 607 - 611, XP031480831
- TING WANG ET AL.: 'Spatio-temporal Patterns in Network Events' ACM CONEXT 30 November 2010, PHILADELPHIA, USA, XP055153986
- PINART, C.: 'A multilayer fault localization framework for IP over all-optical multilayer networks' NETWORK vol. 23, no. 3, May 2009, pages 4 - 9, XP011257688
- LU CHENG ET AL.: 'Probabilistic fault diagnosis for IT services in noisy and dynamic environments' INTEGRATED NETWORK MANAGEMENT 01 June 2009, pages 149 - 156, XP031499092
- YONGLI ZHAO ET AL.: 'Group-failure based cross-layer survivability research in intelligent optical networks' POWER SYSTEM TECHNOLOGY (POWERCON), 2010 INTERNATIONAL CONFERENCE 24 October 2010, pages 1 - 6, XP031834608
- KOMPELLA, R.R. ET AL.: 'Detection and Localization of Network Black Holes' INFOCOM 2007. 26TH IEEE INTERNATIONAL CONFERENCE ON COMPUTER COMMUNICATIONS. 06 May 2007, pages 2180 - 2188, XP031093788
- YUNCHUN LI ET AL.: 'Distributed Application Service Fault Management Using Bayesian Network' NATURAL COMPUTATION, 2009. ICNC '09. FIFTH INTERNATIONAL CONFERENCE vol. 6, 14 August 2009, pages 62 - 66, XP031590335
- YONGNING TANG ET AL.: 'Probabilistic and reactive fault diagnosis for dynamic overlay networks' SCIENCE+BUSINESS MEDIA 26 January 2011, pages 439 - 452, XP019940310
- RAMANA RAO KOMPELLA ET AL.: 'IP Fault Localization Via Risk Modeling' 2005, pages 1 - 14, XP061012390 Retrieved from the Internet: <URL:http://cseweb.ucsd.edu/-snoeren/papers /score- nsdi05.pdf>
- SRIKANTH KANDULA ET AL.: 'Shrink: A Tool for Failure Diagnosis in IP Networks' SIGCOMM'05 WORKSHOPS 22 August 2005, XP055153994 Retrieved from the Internet: <URL:http://research.microsoft.com/pubs/731 35/minenet05>
- CHOLDA, P. ET AL.: 'Recovery and Its Quality in Multilayer Networks' LIGHTWAVE TECHNOLOGY, JOURNAL vol. 28, no. 4, 15 February 2010, pages 372 - 389, XP011295661
- MALGORZATA STEINDERA ET AL.: 'A survey of fault localization techniques in computer networks' SCIENCE OF COMPUTER PROGRAMMING vol. 53, no. ISSUE, November 2004, pages 165 - 194, XP004566811 Retrieved from the Internet: <URL:http://dx.doi.org/10.1016/j.scico.2004 >
- None

## Description

### TECHNICAL FIELD

The present invention relates to a method and a network node for diagnosing one or more faults in a multi-layer communications network.

### BACKGROUND

Fast failure detection and failure diagnosis is an important area in network management. After a failure is detected and data switched to alternative paths, there is a need to quickly localize the failure so that measures may be taken to replace or repair the faulty network element. A communications network involves a large set of distributed hardware and software components. Errors may occur in each device in the network despite best practices in design, implementation, and testing. Root causes can also be affected by external factors.

The multi-layer network comprises network elements in several network protocol layers. An Ethernet E-line service on top of a packet-optical integrated network is an example of a network service provided in a multi-layer network, but other large-scale distribution networks may also be configured as multi-layer networks. Fault localization in a multi-layer networks is generally difficult. Path-trace capabilities, such as IP trace-route are not available in the optical layer.

In multi-layer networks, network elements with measurement capability in the network layers generate measurement records on network traffic. These records may be collected and used for statistical and/or reporting purposes. When faults are experienced in a multi-layer network, the collected information is used to detect failures and performance degradations that exist in the network. Typically, the information is gathered in a network management system NMS that handles fault management and performance management.

Known fault localization methods aim at finding a correlation between a network fault and one or more fault carrying events, i.e., events occurring in response to the network fault. This is usually a difficult task due to the relatively large amount of fault carrying events caused by a network fault. Events may in this context be the issuance of messages informing about something happening in the network, such as the occurrence of an alarm, a performance parameter increment, or a service/action request made by one node to itself or to another node.

A disadvantage of these methods is that they are limited in the scope of correlation of fault carrying events. In a complex communication system, processing of fault carrying events exclusively may not be sufficient to succeed in fault localization. The fault carrying events may be an effect of a fault but may also occur as a result of symptoms of the real fault. These symptoms may be localized far away from the actual location of the fault.

There are existing techniques to search for dependencies between fault carrying event(s) and the problem causing the fault carrying events, within one or more different subsystems. Dependencies between for instance an alarm in a certain subsystem and the cause of the problem, if the cause resides in a different subsystem, are thus not considered. Network performance monitoring, automated failure localization and diagnosis are critical to service providers of large distribution networks, due to the increases in scale, diversity and complexity of the application services. There are significant network management challenges that arise from the combination of rapid growth and increased complexity of the network. Failure and performance degradation diagnosis is an important area in network management.

The complexity and prevalence of communication networks, systems, and associated services have increased over the past several years. Many new applications are increasingly complex in terms of the resources required to operate and deliver the applications, the application functions, and storage architecture, for example. The resources necessary to conceive, develop, activate, and eventually to provide increasingly complex applications continue to increase. In addition to the increasing complexity of applications and services, there is increased demand for applications and services that traverse various network technologies and systems.

From a network management standpoint, these various networks and network devices often report operational information in different ways. For example, the networks and network devices may employ particular network management approaches and technologies for monitoring operation of the network system, and network management personnel associated with particular networks and network devices may rely upon specific, and varied, network management systems and methods. Furthermore, modern networks increasingly rely upon third party vendors to provide hardware and/or software for offered services. These hardware and software devices frequently operate and report according to systems, methods, and even protocols that are not the same as the network providing the services.

None of the techniques for localizing faults and failure diagnosis discussed above are applicable in a large scale multi-layer network. Thus, there is a need for a method to support diagnosis of failure and performance degradation instances in a multi-layer network.

US 2008/114874 A1 discusses techniques for performing root cause analysis of a problem in a communication network. A first set of events are received from a communication network. The first set of events comprises a particular event that indicates a problem in the network. A set of root cause candidate events are identified that are emitted by source entities within a time window from the time when the particular event happens. The number of root cause candidate events is reduced by applying filters associated with the event type of the particular event. For the remaining root cause candidate events, a score is assigned based on one or more factors such as time (difference), topological distance and conditional probability in relation to the particular event. An event in the remaining root cause candidate events having a minimum score value is outputted as the root cause for the problem described by the particular event.

### SUMMARY

It is an object of the present invention to provide such a method for diagnosis of failure in a multi-layer network. This object is achieved through a method according to claim 1 for root cause diagnosis of network failures and performance degradations in a multi-layer network method identifying the network elements that are the source of the failure as well the type of fault in these elements.

It is another object of the invention to provide an arrangement in a network management node in a multi-layer network according to claim 9 for carrying out the inventive method.

### BRIEF DESCRIPTION OF THE DRAWINGS

- Figure 1: schematically illustrates a multi-layer metro Ethernet network
- Figure 2: is a flowchart illustrating embodiments of method steps
- Figure 3: is a block diagram illustrating an embodiment of an arrangement in a network management node
- Figure 4: is an illustration of a fault type inference graph for a three-layer network
- Figure 5: illustrates a simplified scenario in a three-layer network
- Figure 6: a fault type inference graph for the simplified scenario
- Figure 7: illustrates the triggering of on-demand measurement on a new path

### DETAILED DESCRIPTION

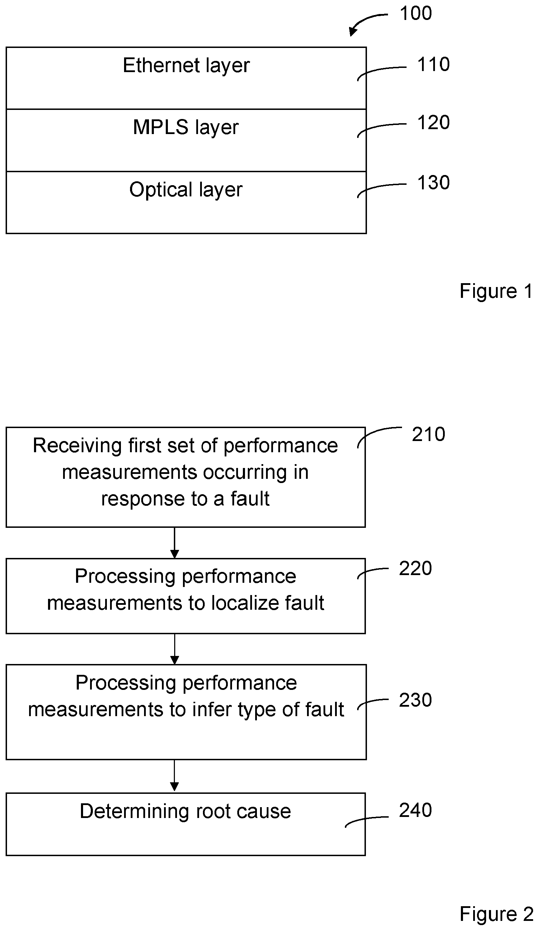

Figure 1 schematically illustrates a multi-layer packet-optical network 100 with Ethernet services running on top of a generic MPLS transport, which is carried by an optical network. The network could be a so called Metro Ethernet used as a metropolitan access network to connect subscribers and businesses to a large service network. Such a network encompasses end-customers with intermediate distribution devices that operate on the different protocol layers: the optical layer 130, the MPLS layer 120 and the Ethernet layer 110.

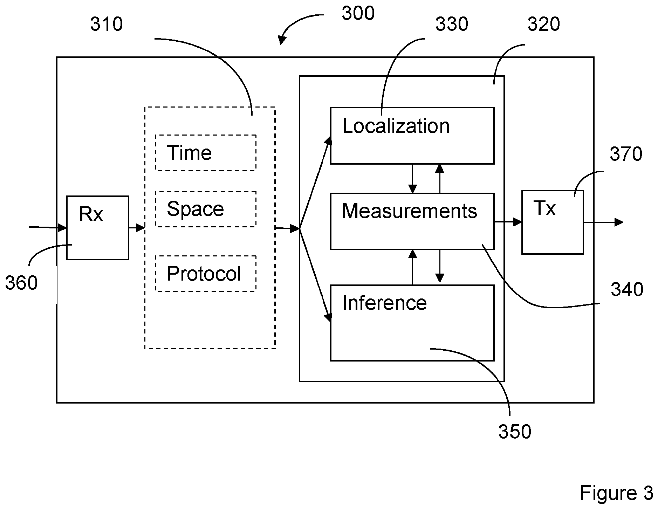

Failure diagnosis in multi-layer networks requires the ability to localize faults in a large set of distributed components. Figure 2 discloses a flowchart illustrating an embodiment of method steps for fault analysis in a multi-layer network. The method could be carried out in a root cause analysis, RCA, module disclosed in Figure 3. The following description will be based on execution in such module. However, it is apparent to the person skilled in the art that the execution of the inventive method may be performed in any type of arrangement in a multi-layer network and in a multi-layer network that consists of other types of protocols, than MPLS, Ethernet and Optical networks.

In a first step of the illustrated embodiment of the inventive method a first set of performance measurements are received 210 representing elements within at least a first and a second layer in the multi-layer communications network. The performance measurements are preferably collected in measurement tools implemented on routers, switches or on hosts, capturing network performance, statistics of traffic performance metrics, e.g., optical bit-error-rate, MPLS delay, Ethernet bandwidth, or any other suitable metric from any protocol layer element, in the multi-layer network. In an embodiment of the invention the first set of performance measurements are represented by input events, wherein a set of network elements are associated with each event. These set of elements are referred to as *'Elements of e'.* The resolution in terms of elements associated with an event may vary between different events. For example, for an event e indicating a long delay on a path, the associated set of elements includes all network components that are part of the path. A router can be one of these components. However, the operator may also need to make the resolution finer and include measurements that have not previously been included. This could be accomplished by adding all involved routers' interfaces to the Element set.

In a next step 220, fault localization is performed identifying a probable set of network elements affected by the fault. The goal of the fault localization is to find all elements that could be the source of the failure/degradation. The fault localization is performed based on an assumption that at any given time, there is only a single fault leading to many input events and corresponding performance measurement anomalies from the elements associated with the input events. In the fault localization step, one or more elements that are part of all the input events are identified.

The first set of performance measurements are represented by input events e(i). A set of network elements e(i).elements are associated to each input event, where a network element may be associated to a plurality of input events. The fault localization process further involves identifying the network elements, common-elements, associated to each of the input events.

**[1]**

| Fault-Localization Algorithm | |
|---|---|
| 1. | **let** *e(1), e(2),...,* e*(n)* be the input events |
| 2. | common-elements = *e(1).elements* |
| 3. | **for** each event *e(i)* **do** |
| 4. | common-elements = common-elements ∩ *e(i).elements* |
| 5. | **end** |

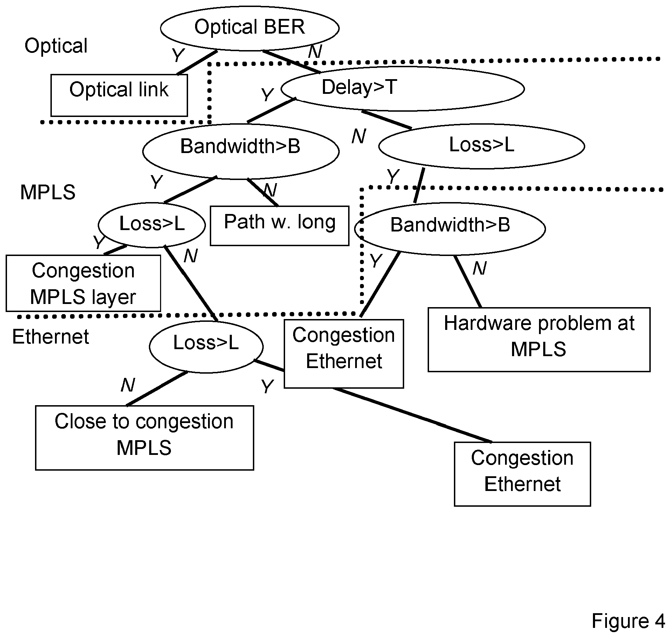

In step 230 of the fault analysis method, the type of failure is assessed. In a root cause analysis, inferring the type of the root cause is uncorrelated to determining the location of the fault. Different types of faults results in different groups of measurement events, e.g., an optical link problem result in a first group of measurement events, a congestion at MPLS layer in a second group of measurement events, non-overlapping with the first group. A congestion at the Ethernet layer on the other hand, will result in a third set of measurement events, that may in part overlap with a fourth group of measurement events following on a situation of near congestion at the MPLS layer. In the step of assessing the fault type, the possible combination of events is tracked through a graph of events. The step of inferring the type of failure is preferably performed in sequence of the step of evaluating the fault. Figure 4 illustrates an embodiment of a fault type inference graph in a three-layer network, based on which the root cause could be identified from a group or set of events. By means of tracking in the graph, it is possible to infer a most likely root cause type given the set of measurements.

In step 240, the root cause is determined by combining information on the location on the fault from step 220 and type of fault from step 230.

In the disclosed inference graph, each oval represents a measurement event and the rims of the ovals represent a state transition. The boxes map to possible causes, fault types, associated with the measurement event linked to the fault type in the inference graph. The graph contains types of measurements and is not specific to any location in the network. For each group of events, the most likely locations are identified using the Fault-Localization Algorithm [1], prior to inferring the type of root cause. The output of the two consecutive steps will be an identification of the fault location and the type of fault.

The identification of measurement events is preferably threshold based, with thresholds set to detect anomalies in the performance measurement results. The invention can be applied with different event detection mechanisms.

In an embodiment of the invention, the step of inferring a fault type involves a search process starting at a lower level moving to a higher level in the networking protocol stack. Events in higher layers may many times be a symptom of events in lower levels. Thus starting the search at a lower level may lead to identification of a fault type faster than performing the fault type inference with a starting point at a higher level. However, the invention is not limited to a lower level starting point, but is equally possible from an opposite protocol starting point.

When deciding on starting points within the same protocol layer, the search process checks measurement events with lower measurement overhead first. Execution of performance measurements in the network introduces a measurement load in the multilayer network, also known as the measurement overhead in the multilayer network. Starting with lower overhead measurements, the search process will be initiated for those measurements that may be performed with little impact on the overall performance of the multi-layer network; thus, unnecessary measurement load may be reduced in the system. Low overhead measurements are usually conducted more frequently and may thus provide more accurate information to help isolate the fault type faster.

The inference type search uses a pre-generated inference graph as input. The graph is traversed from a root node to a root cause node. For each node, a search is performed in an event set E for all events with the same type as the node. The search stops when a root cause node is detected.

In the step of inferring the fault type, the first set of performance measurements are represented by input events *e(i).* An event set E is formed by a set of input events *e(i)* forming a sequence of input events. Root cause analysis is performed for event set E, determining one or more symptoms.

**[2]**

| Root Cause Analysis Algorithm (G,E) | |
|---|---|
| 1. | Let event set E={e(1), e(2),..., e(n)} be the set of input events |
| 2. | Start from the root node in fault type inference graph G |
| 3. | **for** current node *n* in G **do** |
| 4. | find all events in E where e.type=n.type |
| 5. | start transition to the next node i.transition(e.value) |
| 6. | **if** n.type is a root cause type |
| 7. | **break** |
| 8. | **end** |

In an embodiment of the invention, a pre-generated inference graph is used as an input, mapping a type of fault to the symptoms. The graph is traversed from the root node. Starting in a root node, a search is performed in the event set E for all events with the same type as the current node. If any event of the current type has an anomaly, traversing will continue to the nest node with the "Y" branch. If there is no anomaly, traversing will continue through the "X" branch. If the current node is a root cause node the search stops. If there are no unambiguous results relating to a root cause at this point of the search, e.g., when the search results in two or more possible root causes, an on-demand algorithm for generating further measurements should be triggered at this point.

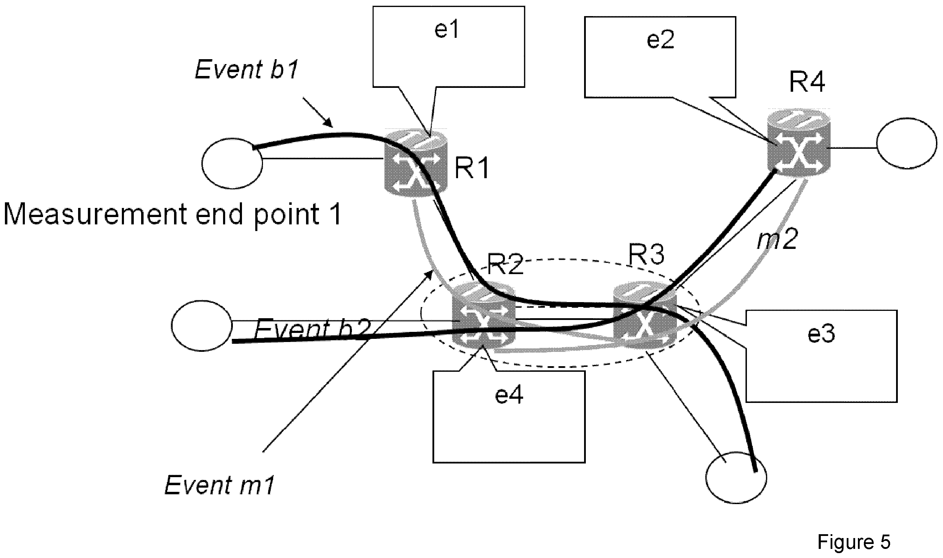

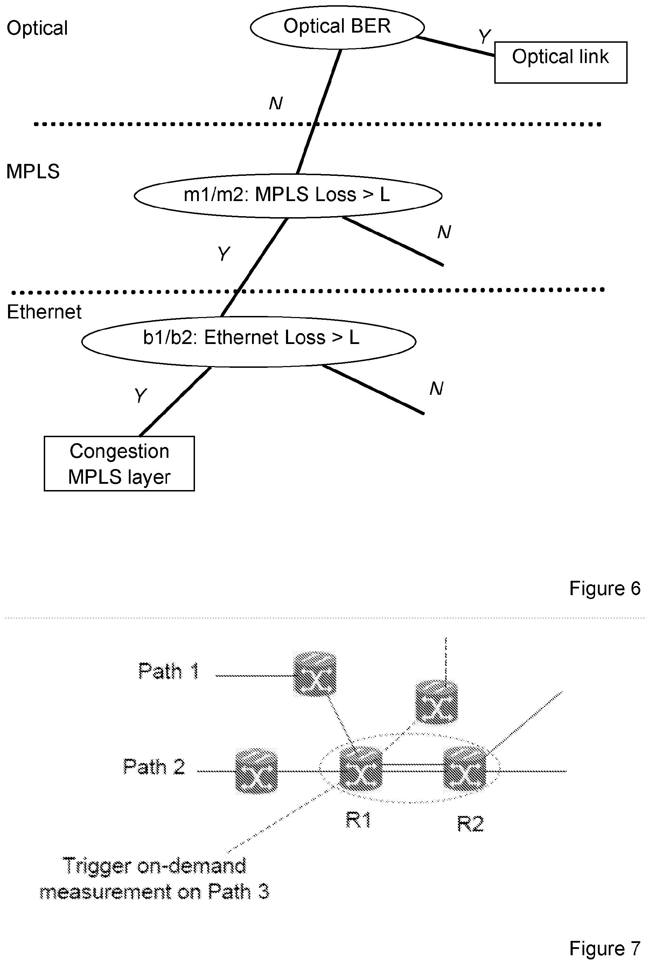

Figure 5 illustrates a scenario in a three-layer network, involving four routers R1-R4. The three-layer network includes an Ethernet layer, a MPLS layer and an Optical layer. Figure 6 exemplifies an inference graph for such a three-layer network.

In order to accurately identify the root cause, a complete set of information on performance at each layer and at each network element is required. However, the conciseness of the set of performance information must be balanced against the concerns for measurement overhead. In the disclosed scenario, measurement capability is available involving the routers R1-R4 in the three layer network. In response to detection of some type of malfunction in the network, performance measurements are collected in measurement tools implemented on the routers. The performance measurements are represented by input events. Each input event represents measurement results from one or more measurement tools. In the disclosed simplified scenario a group of input events e1-e4, b1, b2 and m1, m2 respectively representing the optical layer, the Ethernet layer and the MPLS layer are identified. The resolution in terms of elements associated with an event varies between the events. The input events e1-e4, are based on bit error rate measurements in the routers, the input events b1, b2 concern Ethernet bandwidth and include measurements relating to multiple routers b1:{R1, R2, R3}, b2:{R2, R3, R4}; the same applies for input events m1, m2 that concern MPLS trace-route, m1:{R1, R2, R3}, m2:{R2,R3, R4}.

A receiver 360 in an arrangement 300 in a network management system receives a first set of input events b1, b2, m1, m2, e1-e4. The performance measurements and the corresponding input events represent the Ethernet layer {b1, b2}, the MPLS layer {m1, m2}, and the Optical layer {e1, e2, e3, e4}. The input events occur in response to a malfunction in the disclosed three-layer network. Events are generated by an event detection module in response to a malfunction in the disclosed three-layer network. The event identification is usually performed as a threshold based method, wherein thresholds based on time T, packet loss L and bandwidth B are defined. An Ethernet bandwidth measurement is represented by an input event b1 defined as an Ethernet Bandwidth>B. A further event b2 defined also defined as an Ethernet bandwidth>B. An MPLS traceroute measurement is represented by an input event m1 defined as an MPLS Loss>L; a further event in the MPLS layer is identified as input event m2 also defined as an MPLS Loss>L. In the optical layer, events e1-e4 represent bit error rate measurements in the routers R1-R4.

The localization of the fault is performed by identifying a probable set of network elements affected by identifying the set of routers most commonly represented in all of the events. A search for the routers associated with each event is performed. In the illustrated scenario, the result of this search is a set of most likely r for each event:
- b1:{R1, R2, R3}
- b2:{R2, R3, R4}
- m1:{R1, R2, R3}
- m2:{R2, R3, R4}
- e1:{R1}
- e2:...

Based on the likely locations for b1, b2, m1 and m2, the most common set among all locations is identified as locations R2, R3.

The type of fault is inferred through a fault analysis performed as a root cause analysis in an inference graph. Following the inference graph illustrated in Figure 6, the starting point for type of fault inference would be based a Bit Error Rate BER event based on BER measurements, since this type of measurements will directly reveal problems caused by optical link errors. In the illustrated scenario, the measurements represented by events e1-e4 are assumed to be in the normal range. The search then continues with detection of a MPLS Packet Loss. In the exemplified scenario, m1 and m2 are found to exceed a predetermined threshold L. The next step for the root cause analysis in the inference graph, exemplified in Figure 6, involves detection of Ethernet Loss. In the exemplified scenario, the events b1 and b2 exceed the predetermined threshold L. From the root cause analysis it may then be determined that the most likely root cause, i.e., type of fault, is congestion at the MPLS layer.

As previously disclosed for Figure 4, a fault type inference graph is structured to narrow down the most likely fault type for a given set of symptoms. A root cause analysis is performed based on a set of observations (events) from existing measurements. If sufficient measurements are lacking to complete the searching of root cause, the determination of fault type is prevented. In such a situation, there is a need to trigger additional measurements of a different type to those previously available.

The root cause inference graph can be used for improving the accuracy of root cause analysis, especially when sufficient measurements for an actual fault location and type determination are lacking. In an embodiment of the invention, a second set of measurements are triggered based on the results of root cause analysis. Three types of triggering conditions are foreseen: when sufficient measurements to draw a conclusion on root cause is missing, when sufficient measurements to identify the location of the fault are missing, and where there is no strong symptom of service degradation but an indication of future congestion.

An additional second set of measurements may be triggered following a root cause analysis based on the first set of measurements. During the first root cause analysis, it is possible to identify a set of additional events required in order to form a conclusion on a fault type. A second set of performance measurements could represent measurements of a type not previously included in the performance measurements due to measurement overhead. However, in a situation where a fault exists in the multi-layer network and where fault-localization attempts have failed, such increased overhead will be acceptable. New types of measurement could include high-frequency loss measurement, more accurate/more aggressive bandwidth measurement, jitter measurement, etc. When encountering possible fault types without matching events, a triggering command initiates additional measurements to generate a second set of measurements. The second set of measurements are represented by input events and included in the step of inferring a fault type through root cause analysis in the fault inference graph.

A second set of measurements may also be triggered when a set of available measurements do not provide sufficient information to localize the fault. Figure 7 illustrates a situation where additional measurements from a new path, Path 3, are required. It is an assumption for the illustrated scenario that the available events enables a narrowing down of the localization to two routers {R1, R2} following the measurement paths Path 1 and Path 2, that both are likely locations without any possibility to distinguish a most likely location based on the available data. In this case, a second set of measurements are needed from a different path. This additional path, Path 3, is shown in a dashed line in the figure. With the help of the measurements triggered on Path 3, it is possible to accurately isolate the fault to router R1. In order to identify where to initiate measurements for the second set of measurements, a search is performed in the finest grained location set. In the disclosed example, this corresponds to R1 and R2. The search identifies one or more possible paths in the topology that traverses only a subset of location. If there are such paths, additional measurements from elements along the path may help reduce the set of most likely locations to an identification of a most likely location. In this part of the process of triggering a second set of measurements, it is assumed that the measurement type is given.

In order to prevent overloading of the network and the devices, measuring is usually performed in a low-rate manner. When failure or performance degradation occurs, the frequency of measuring may be increased to obtain more accurate measurement results. In order to be able to identify and initiate preventive actions prior to network failure, it is possible to increase the measurement frequency. A second set of measurements representing higher frequency measurements will be triggered when one or more detected events are close to a defined threshold for triggering alarms. Similarly, when the fault type diagnosis suggests that the network is close to congestion, more frequent measurements are required in order to detect or predict future congestion.

In the disclosed embodiments for triggering additional measurements, the process of choosing which measurements to require for the second set of measurements are based on data flagged as missing by the root cause analysis algorithm. The process of initiating generation of the second set of measurements is automated and enables an improved method for localizing faults and identifying fault types in a multi-layer network. It is of course possible to generate a second set of measurements including measurements from different paths, as well as measurements of another type or an increased frequency. However, the analysis of the second set of measurements would then preferably be carried out for each individual subset.

A benefit of the disclosed method for localizing and inferring type of fault is that the method considers performance measurements at different protocol layers in the network. The performance measurements are collected by one or more measurement tools. The root cause of a fault is inferred from a set of symptoms extracted from measurements. The method can be deployed without access to the network devices.

Working with on-demand measurements when additional measurements are required to draw a conclusion on localization and type of faults, reduces measurement overhead in the fault analysis process while enabling improved inference accuracy.

The disclosed method may operate in a packet-optical integrated network with Ethernet services, e.g., a Metro-Ethernet Self Organizing Network MESON. The disclosed method can be performed without integration with software deployment and billing systems. The method may automatically determine the configuration of the measurement tools required for gathering the data required in the root cause analysis process.

Figure 3 discloses a root cause analysis, RCA, module for carrying out the invention. The root cause analysis module is an arrangement included in a network management system in a network management node in a multi-layer network or in a network management system distributed amongst several nodes in a multi-layer network. The network management system receives measurements originated in distributed measurement units in the multi-layer network. In the management system, a first set of input events corresponding to measurements in a first set of performance measurements may be generated. A receiver in the RCA module receives the first set of input events or the first set of measurements. The first set of input events are processed in an event correlator 310 for processing input events corresponding to measurements in a first set of performance measurements received by a receiver 360. The events are correlated in time, space or protocol. The correlated events form the input to a root cause analyzer 320 for further processing of the events or for processing of the first set of performance measurements. A spatial localization unit 330 determines a set of network elements most likely to be affected in response to a failure in the multi-layer network. The type of fault is determined in a fault type inference unit 350. If further measurements are required in order to make a conclusion on the root cause of a failure, further measurements may be triggered. The RCA module includes a measurement generating unit 340 communicating with the spatial localization unit 330 and the fault type inference unit 350 and initiating generation of a second set of measurements based on input from the spatial localization unit 330 or the fault type inference unit 350. A transmitter 370 provides an output from the RCA module for further processing in a network management system.

## Claims

1. A method in a network management system for diagnosing a root cause of a fault in a multi-layer communications network, the method comprising the steps of:
- receiving (210) a first set of performance measurements representing performance of network elements on at least a first and a second layer in the multi-layer communications network, **characterized in that** the method further comprising:
- representing the first set of performance measurements by input events (e(i));
- localizing (220) the fault by identifying a probable set of the network elements affected by the fault, wherein the probable set of the network elements is identified by:
associating a set of the network elements (e(i).elements) to each of the input events (e(i)), wherein a network element, of the set of the network elements (e(i).elements), is associated to a plurality of the input events (e(i)); and
identifying at least one network element, of the set of the network elements (e(i).elements) associated to each of the input events (e(i)) representing the first set of performance measurements;
- inferring (230) a type of the fault from one or more symptoms incurred from one or more performance measurements in the first set of performance measurements;
- determining (240) the root cause by combining information on the probable set of the network elements with the inferred type of fault; and
- triggering a second set of performance measurements in addition to measurements included in the first set of performance measurements based on results of the root cause analysis, wherein the second set of performance measurements represents more frequent performance measurements than those given in the first set of performance measurements.

2. The method according to claim 1, wherein the step of inferring (230) the type of the fault includes:
- determining the one or more symptoms following from a sequence of the input events (e(i)); and
- mapping at least one type of the fault to the one or more symptoms.

3. The method according to claim 2, wherein the sequence of the input events (e(i)) is tracked in a graph of events.

4. The method according to claim 3, wherein tracking in the graph is initiated at a lower protocol level moving to a higher level in the multi-layer communications network.

5. The method according to any of claims 3-4, wherein the graph is pre-generated based on basic domain knowledge of protocol layers, upon setting up of the multi-layer communications network.

6. The method according to claim 1, wherein the first set of performance measurements includes performance measurements from multiple first measurement paths through the network elements, wherein each first measurement path includes a subset of the network elements, wherein the second set of performance measurements represents performance measurements generated on at least a second measurement path, and wherein the step of localizing (220) the fault is repeated for the second set of performance measurements.

7. The method according to claim 1, wherein the second set of performance measurements represents performance measurements of other types to those given in the first set of performance measurements, and wherein the second set of performance measurements is provided as an input to the step of inferring (230) the type of fault.

8. The method according to any of claims 6-7, wherein the second set of performance measurements is a combination of: measurements on at least the second measurement path, measurements of other types, and more frequent measurements to those given in the first set of performance measurements.

9. An arrangement (300) in a network management node in a multi-layer communications network, the arrangement (300) comprising:
- a receiver (360) configured to receive a first set of performance measurements representing performance of network elements on at least a first and a second layer in the multi-layer communications network, **characterized in that** the arrangement (300) further comprising:
- an event correlator (310) to process input events (e(i)) corresponding to measurements in the first set of performance measurements;
- a root cause analyzer (320) arranged to detect affected network elements and a type of a fault type upon network failure, wherein the root cause analyzer (320) comprises:
i. a spatial localization unit (330) configured to identify a probable set of the network elements affected by the fault, wherein the probable set of the network elements is identified by:
associating a set of the network elements (e(i).elements) to each of the input events (e(i)), wherein a network element, of the set of the network elements (e(i).elements), is associated to a plurality of the input events (e(i)); and
identifying at least one network element, of the set of the network elements (e(i).elements), associated to each of the input events (e(i)) representing the first set of performance measurements; and
ii. a fault type inference unit (350) configured to infer the type of the fault from one or more symptoms incurred from one or more performance measurements in the first set of performance measurements;
- a transmitter (370) configured to output information from the root cause analyzer (320); and
- a measurement generating unit (340) adapted to initiate generation of a second set of performance measurements in addition to measurements included in the first set of performance measurements based on an input from the spatial localization unit (330) or the fault type inference unit (350), wherein the second set of performance measurements represents more frequent performance measurements than those given in the first set of performance measurements.

10. The arrangement (300) according to claim 9, wherein the event correlator (310) correlates events in time, space, or protocol, and to output the result to the root cause analyzer (320).

11. The arrangement (300) according to claim 9 or 10, wherein the measurement generating unit (340) is further adapted to communicate with the spatial localization unit (330) and the fault type inference unit (350).

12. The method according to claim 1, wherein the second set of performance measurements is used to anticipate future service degradation.

## Patentansprüche

1. Verfahren in einem Netzwerkverwaltungssystem zum Diagnostizieren einer Grundursache eines Fehlers in einem mehrschichtigen Kommunikationsnetzwerk, wobei das Verfahren folgende Schritte umfasst:
- Empfangen (210) eines ersten Satzes von Leistungsmessungen, die die Leistung von Netzwerkelementen auf mindestens einer ersten und einer zweiten Schicht in dem mehrschichtigen Kommunikationsnetzwerk darstellen, **dadurch gekennzeichnet, dass** das Verfahren ferner Folgendes umfasst:
- Darstellen des ersten Satzes von Leistungsmessungen durch Eingabeereignisse (e(i));
- Lokalisieren (220) des Fehlers durch Identifizieren eines wahrscheinlichen Satzes der Netzwerkelemente, die von dem Fehler betroffen sind, wobei der wahrscheinliche Satz der Netzwerkelemente durch Folgendes identifiziert wird:
Zuordnen eines Satzes der Netzwerkelemente (e(i).elements) zu jedem der Eingabeereignisse (e(i)), wobei ein Netzwerkelement des Satzes der Netzwerkelemente (e(i).elements) einer Vielzahl der Eingabeereignisse (e(i)) zugeordnet ist; und
Identifizieren mindestens eines Netzwerkelements aus dem Satz der Netzwerkelemente (e(i).elements), das jedem der Eingabeereignisse (e(i)) zugeordnet ist, die den ersten Satz von Leistungsmessungen darstellen;
- Ableiten (230) eines Typs des Fehlers aus einem oder mehreren Symptomen, die aus einer oder mehreren Leistungsmessungen in dem ersten Satz von Leistungsmessungen entstanden sind;
- Bestimmen (240) der Grundursache durch Kombinieren von Informationen über den wahrscheinlichen Satz der Netzwerkelemente mit dem abgeleiteten Fehlertyp; und
- Auslösen eines zweiten Satzes von Leistungsmessungen zusätzlich zu den Messungen, die in dem ersten Satz von Leistungsmessungen enthalten sind, auf der Grundlage der Ergebnisse der Grundursachenanalyse, wobei der zweite Satz von Leistungsmessungen häufigere Leistungsmessungen darstellt als jene, die im ersten Satz von Leistungsmessungen angegeben sind.

2. Verfahren nach Anspruch 1, wobei der Schritt des Ableitens (230) des Typs des Fehlers Folgendes umfasst:
- Bestimmen des einen oder der mehreren Symptome, die aus einer Sequenz der Eingabeereignisse (e(i)) folgen; und
- Zuordnen mindestens eines Typs des Fehlers zu dem einen oder den mehreren Symptomen.

3. Verfahren nach Anspruch 2, wobei die Abfolge der Eingabeereignisse (e(i)) in einem Graphen von Ereignissen verfolgt wird.

4. Verfahren nach Anspruch 3, wobei die Verfolgung in dem Graphen auf einer niedrigeren Protokollebene begonnen wird, die sich zu einer höheren Ebene in dem mehrschichtigen Kommunikationsnetzwerk bewegt.

5. Verfahren nach einem der Ansprüche 3 bis 4, wobei der Graph auf der Grundlage von grundlegenden Domänenkenntnissen über Protokollschichten bei der Einrichtung des mehrschichtigen Kommunikationsnetzwerks vorgeneriert wird.

6. Verfahren nach Anspruch 1, wobei der erste Satz von Leistungsmessungen Leistungsmessungen von mehreren ersten Messpfaden durch die Netzwerkelemente umfasst, wobei jeder erste Messpfad eine Teilmenge der Netzwerkelemente umfasst, wobei der zweite Satz von Leistungsmessungen Leistungsmessungen darstellt, die auf mindestens einem zweiten Messpfad erzeugt werden, und wobei der Schritt der Lokalisierung (220) des Fehlers für den zweiten Satz von Leistungsmessungen wiederholt wird.

7. Verfahren nach Anspruch 1, wobei der zweite Satz von Leistungsmessungen Leistungsmessungen anderer Typen als die im ersten Satz von Leistungsmessungen angegebenen repräsentiert, und wobei der zweite Satz von Leistungsmessungen als Eingabe für den Schritt des Ableitens (230) des Typs des Fehlers bereitgestellt wird.

8. Verfahren nach einem der Ansprüche 6 bis 7, wobei der zweite Satz von Leistungsmessungen eine Kombination aus Folgendem ist: Messungen auf mindestens dem zweiten Messpfad, Messungen anderer Typen und häufigere Messungen als die im ersten Satz von Leistungsmessungen angegebenen.

9. Anordnung (300) in einem Netzwerkverwaltungsknoten in einem mehrschichtigen Kommunikationsnetzwerk, wobei die Anordnung (300) Folgendes umfasst:
- einen Empfänger (360), der dafür konfiguriert ist, einen ersten Satz von Leistungsmessungen empfangen, die die Leistung von Netzwerkelementen auf mindestens einer ersten und einer zweiten Schicht in dem mehrschichtigen Kommunikationsnetzwerk darstellen, **dadurch gekennzeichnet, dass** die Anordnung (300) ferner Folgendes umfasst:
- einen Ereigniskorrelator (310) zum Verarbeiten von Eingabeereignissen (e(i)), die den Messungen in dem ersten Satz von Leistungsmessungen entsprechen;
- einen Grundursachenanalysator (320), der dafür ausgelegt ist, betroffene Netzwerkelemente und einen Typ eines Fehlertyps bei einem Netzwerkausfall zu erkennen, wobei der Grundursachenanalysator (320) Folgendes umfasst:
i. eine räumliche Lokalisierungseinheit (330), die dafür konfiguriert ist, einen wahrscheinlichen Satz der von dem Fehler betroffenen Netzwerkelemente zu identifizieren, wobei der wahrscheinliche Satz der Netzwerkelemente durch Folgendes identifiziert wird:
Zuordnen eines Satzes der Netzwerkelemente (e(i) .elements) zu jedem der Eingabeereignisse (e(i)), wobei ein Netzwerkelement des Satzes der Netzwerkelemente (e(i).elements) einer Vielzahl der Eingabeereignisse (e(i)) zugeordnet ist; und
Identifizieren mindestens eines Netzwerkelements aus der Menge der Netzwerkelemente (e(i).elements), das jedem der Eingabeereignisse (e(i)) zugeordnet ist, die die erste Menge von Leistungsmessungen darstellen; und
ii. eine Fehlertyp-Ableiteinheit (350), die dafür konfiguriert ist, den Typ des Fehlers aus einem oder mehreren Symptomen abzuleiten, die aus einer oder mehreren Leistungsmessungen in dem ersten Satz von Leistungsmessungen entstanden sind;
- einen Sender (370), der dafür konfiguriert ist, Informationen von dem Ursachenanalysator (320) auszugeben; und
- eine Messwerterzeugungseinheit (340), die dafür ausgelegt ist, die Erzeugung eines zweiten Satzes von Leistungsmessungen zusätzlich zu den Messungen zu initiieren, die in dem ersten Satz von Leistungsmessungen enthalten sind, basierend auf einer Eingabe von der räumlichen Lokalisierungseinheit (330) oder der Fehlertyp-Ableiteinheit (350), wobei der zweite Satz von Leistungsmessungen häufigere Leistungsmessungen darstellt als jene, die im ersten Satz von Leistungsmessungen angegeben sind.

10. Anordnung (300) nach Anspruch 9, wobei der Ereigniskorrelator (310) Ereignisse in Zeit, Raum oder Protokoll korreliert und das Ergebnis an den Ursachenanalysator (320) ausgibt.

11. Anordnung (300) nach Anspruch 9 oder 10, wobei die Messwert-Erzeugungseinheit (340) ferner dafür ausgelegt ist, mit der räumlichen Lokalisierungseinheit (330) und der Fehlertyp-Ableiteinheit (350) zu kommunizieren.

12. Verfahren nach Anspruch 1, wobei der zweite Satz von Leistungsmessungen verwendet wird, um eine zukünftige Verschlechterung des Dienstes vorherzusehen.

## Revendications

1. Procédé dans un système de gestion de réseau pour diagnostiquer une cause profonde d'une défaillance dans un réseau de communications multicouche, le procédé comprenant les étapes consistant à :
- recevoir (210) un premier ensemble de mesures de performance représentant la performance d'éléments de réseau sur au moins une première et une deuxième couche dans le réseau de communications multicouche, **caractérisé en ce que** le procédé comprend en outre :
- la représentation du premier ensemble de mesures de performance par des événements d'entrée (e(i)) ;
- localiser (220) la défaillance par l'identification d'un ensemble probable des éléments de réseau touchés par la défaillance, dans lequel l'ensemble probable d'éléments de réseau est identifié par :
l'association d'un ensemble des éléments de réseau (e(i).éléments) à chacun des événements d'entrée (e(i)), dans lequel un élément de réseau, de l'ensemble d'éléments de réseau (e(i).éléments), est associé à une pluralité des événements d'entrée (e(i)) ; et
l'identification d'au moins un élément de réseau, de l'ensemble d'éléments de réseau (e(i).éléments), associé à chacun des événements d'entrée (e(i)) représentant le premier ensemble de mesures de performance ;
- déduire (230) un type de la défaillance à partir d'au moins un symptôme encouru à partir d'au moins une mesure de performance dans le premier ensemble de mesures de performance ;
- déterminer (240) la cause profonde par la combinaison d'informations sur l'ensemble probable d'éléments de réseau et du type de défaillance déduit ; et
- déclencher un deuxième ensemble de mesures de performance en plus de mesures incluses dans le premier ensemble de mesures de performance sur la base de résultats de l'analyse de cause profonde, dans lequel le deuxième ensemble de mesures de performance représente des mesures de performance plus fréquentes que celles données dans le premier ensemble de mesures de performance.

2. Procédé selon la revendication 1, dans lequel l'étape consistant à déduire (230) le type de la défaillance comporte :
- la détermination d'au moins un symptôme suivant une séquence des événements d'entrée (e(i)) ; et
- le mappage d'au moins un type de la défaillance à l'au moins un symptôme.

3. Procédé selon la revendication 2, dans lequel la séquence des événements d'entrée (e(i)) est suivie sur un graphique d'événements.

4. Procédé selon la revendication 3, dans lequel le suivi sur le graphique est lancé à un niveau de protocole inférieur tendant vers un niveau supérieur dans le réseau de communications multicouche.

5. Procédé selon l'une quelconque des revendications 3 à 4, dans lequel le graphique est généré au préalable sur la base d'une connaissance de domaine de base de couches de protocole, lors du paramétrage du réseau de communications multicouche.

6. Procédé selon la revendication 1, dans lequel le premier ensemble de mesures de performance comporte des mesures de performance à partir de multiples premières voies de mesure à travers les éléments de réseau, dans lequel chaque première voie de mesure comporte un sous-ensemble d'éléments de réseau, dans lequel le deuxième ensemble de mesures de performance représente des mesures de performance générées sur au moins une deuxième voie de mesure, et dans lequel l'étape consistant à localiser (220) la défaillance est répétée pour le deuxième ensemble de mesures de performance.

7. Procédé selon la revendication 1, dans lequel le deuxième ensemble de mesures de performance représente des mesures de performance d'autres types que ceux donnés dans le premier ensemble de mesures de performance, et dans lequel le deuxième ensemble de mesures de performance est fourni sous la forme d'une entrée à l'étape consistant à déduire (230) le type de défaillance.

8. Procédé selon l'une quelconque des revendications 6 à 7, dans lequel le deuxième ensemble de mesures de performance est une combinaison de : mesures sur au moins la deuxième voie de mesure, mesures d'autres types, et mesures plus fréquentes que celles données dans le premier ensemble de mesures de performance.

9. Agencement (300) dans un nœud de gestion de réseau dans un réseau de communications multicouche, l'agencement (300) comprenant :
- un récepteur (360) configuré pour recevoir un premier ensemble de mesures de performance représentant la performance d'éléments de réseau sur au moins une première et une deuxième couche dans le réseau de communications multicouche, **caractérisé en ce que** l'agencement (300) comprend en outre :
- un corrélateur d'événements (310) pour traiter des événements d'entrée (e(i)) correspondant à des mesures dans le premier ensemble de mesures de performance ;
- un analyseur de cause profonde (320) agencé pour détecter des éléments de réseau touchés et un type de défaillance lors d'une panne de réseau, dans lequel l'analyseur de cause profonde (320) comprend :
i. une unité de localisation spatiale (330) configurée pour identifier un ensemble probable des éléments de réseau touchés par la défaillance, dans lequel l'ensemble probable des éléments de réseau est identifié par :
l'association d'un ensemble des éléments de réseau (e(i).éléments) à chacun des événements d'entrée (e(i)), dans lequel un élément de réseau, de l'ensemble d'éléments de réseau (e(i).éléments), est associé à une pluralité des événements d'entrée (e(i)) ; et
l'identification d'au moins un élément de réseau, de l'ensemble des éléments de réseau (e(i).éléments), associé à chacun des événements d'entrée (e(i)) représentant le premier ensemble de mesures de performance ; et
ii. une unité de déduction de type de défaillance (350) configurée pour déduire le type de la défaillance à partir d'au moins un symptôme encouru à partir d'au moins une mesure de performance dans le premier ensemble de mesures de performance ;
- un émetteur (370) configuré pour fournir en sortie des informations provenant de l'analyseur de cause profonde (320) ; et
- une unité de génération de mesures (340) adaptée pour lancer la génération d'un deuxième ensemble de mesures de performance en plus de mesures incluses dans le premier ensemble de mesures de performance sur la base d'une entrée provenant de l'unité de localisation spatiale (330) ou de l'unité de déduction de type de défaillance (350), dans lequel le deuxième ensemble de mesures de performance représente des mesures de performance plus fréquentes que celles données dans le premier ensemble de mesures de performance.

10. Agencement (300) selon la revendication 9, dans lequel le corrélateur d'événements (310) met en corrélation des événements dans le temps, l'espace, ou un protocole, et fournit en sortie le résultat à l'analyseur de cause profonde (320).

11. Agencement (300) selon la revendication 9 ou 10, dans lequel l'unité de génération de mesures (340) est en outre adaptée pour communiquer avec l'unité de localisation spatiale (330) et l'unité de déduction de type de défaillance (350).

12. Procédé selon la revendication 1, dans lequel le deuxième ensemble de mesures de performance est utilisé pour anticiper une future dégradation de service.
